# EUROPEAN PATENT APPLICATION

(11) **EP 2 461 368 A1**
(43) Date of publication of application: **06.06.2012**
(21) Application number: 09847758.1
(22) Date of filing: 27.07.2009
(51) Int. Cl.: H01L 31/042, H01R 4/02

(54) **TERMINAL BOARD CIRCUIT**

(71) Applicant: Onamba Co., Ltd., Osaka-shi, Osaka 537-0001 (JP)
(72) Inventor: ISHIDA, Jun, Osaka-shi Osaka 537-0001 (JP); HAMANO, Kenji, Osaka-shi Osaka 537-0001 (JP); YUHI, Tomotsugu, Osaka-shi Osaka 537-0001 (JP)
(74) Representative: Baumann, Jörg
(86) International application number: PCT/JP2009/003528
(87) International publication number: WO 2011/013163

(57) **Abstract**

The present invention provides a terminal plate circuit wherein the reliability of an electrical connection state between the terminal plate and the rectangular wire is enhanced by a method suitable for automation of manufacturing processes. The present invention is a terminal plate circuit including a terminal plate and a rectangular wire, **characterized in that** an opening through which the rectangular wire can penetrate is formed in the terminal plate; in that the rectangular wire penetrates the terminal plate from one side to the other side thereof through the opening; and in that the rectangular wire projecting onto the other side of the terminal plate is pressed against a surface and/or an edge on the other side of the terminal plate by a projection of the terminal plate which has been formed by pushing out a material of a part of the terminal plate from one side to the other side in such a manner as not to be completely separated from the terminal plate.

## Description

### Technical Field of the Invention

The present invention relates to a terminal plate circuit being able to securely hold an electrical connection state between a terminal plate and a rectangular wire even in a severe environment such as within a terminal box for solar cell panel and being suitable for automation of manufacturing processes.

### Background Art

Conventionally, in order to connect a rectangular wire electrically to a terminal plate in a terminal plate circuit, it has been carried out by providing an opening, through which the rectangular wire penetrates, in the terminal plate, inserting the rectangular wire through this opening from upper side or lower side, contacting the terminal plate with the rectangular wire electrically, and soldering or welding the contacting part.

However, in a case where the terminal plate circuit is used within a terminal box for solar cell panel, the electrical connection state between the terminal plate and the rectangular wire must be maintained for an extremely long period of time in the severe environment, so that the reliability has not been sufficient by a connection method implemented by only soldering or welding of the aforementioned background art.

On the other hand, as a method for enhancing the reliability of the electrical connection state between the terminal plate and the rectangular wire, fixing the rectangular wire to the terminal plate with use of a screw and thereafter soldering or welding the fixed part has been carried out conventionally; however, fixation with a screw involves formation of a screw hole and a work of mounting the screw, so that the manufacturing processes become complex and hence the above method is not desirable.

In view of this, the applicant has already proposed a terminal plate circuit, in which a pressing member capable of sandwiching an end of a terminal plate presses a rectangular wire against the terminal plate, so as to enhance the reliability of an electrical connection state between the terminal plate and the rectangular wire (cf. Patent Document 1).

The terminal plate circuit disclosed in Patent Document 1 can remarkably enhance the reliability of the connected part between the terminal plate and the rectangular wire. However, the pressing member is independently needed, and therefore, there was a space to further improve this terminal plate circuit for automating the manufacturing processes.

### Prior Art Document

### Patent Document

Patent Document 1: WO 2009/081508

### Disclosure of the Invention

### Problem that the Invention is to Solve

The present invention has been devised under such a circumstance of the background art, and an object thereof is to provide a terminal plate circuit in which the reliability of an electrical connection state between a terminal plate and a rectangular wire is enhanced by a method suitable for automation of manufacturing processes.

### Means for Solving the Problem

As a result of an earnest study by the inventors of the present application in order to achieve the above object, they have found that by pressing a rectangular wire penetrating the terminal plate against the terminal plate by means of a projection formed by pushing out a material of a part of a terminal plate from one side to the other side, the reliability of an electrical connection state between the terminal plate and the rectangular wire can be readily enhanced in a method suitable for automating manufacturing processes, and thus, they have reached the completion of the present invention.

Specifically, the present invention provides a terminal plate circuit including a terminal plate and a rectangular wire, **characterized in that** an opening through which the rectangular wire can penetrate is formed in the terminal plate by pushing out a material of a part of the terminal plate from one side to the other side in such a manner as not to be completely separated from the terminal plate; in that the rectangular wire penetrates the terminal plate from one side to the other side thereof through the opening; and in that the rectangular wire projecting onto the other side of the terminal plate is pressed against a surface and/or an edge on the other side of the terminal plate by a projection of the terminal plate which has been formed by pushing out the material of a part of the terminal plate.

Moreover, the present invention provides a terminal plate circuit including a terminal plate and a rectangular wire, **characterized in that** an opening through which the rectangular wire can penetrate is formed in the terminal plate; in that the rectangular wire penetrates the terminal plate from one side to the other side thereof through the opening; and in that the rectangular wire projecting onto the other side of the terminal plate is pressed against a surface and/or an edge on the other side of the terminal plate by a projection of the terminal plate which has been formed by pushing out a material of a part of the terminal plate at a position different from the opening from one side to the other side of the terminal plate in such a manner as not to be completely separated from the terminal plate.

In preferred embodiments of the terminal plate circuit of the present invention, the part at which the rectangular wire is pressed against the terminal plate is soldered or welded, and the terminal plate circuit is used within a terminal box for solar cell panel.

### Advantages of the Invention

In the terminal plate circuit of the present invention, the projection is formed by pushing out the material of a part of the terminal plate from one side to the other side, and then, the rectangular wire is pressed against the terminal plate by using the projection. Therefore, it is possible to enhance the reliability of the electrical connection state between the terminal plate and the rectangular wire by the simple configuration without using any independent component. Moreover, the terminal plate circuit of the present invention is remarkably suitable for automation of the manufacturing processes since reliable electrical connection state can be formed simply by allowing the rectangular wire to penetrate through the opening of the terminal plate and by pressing the projection of the terminal plate against the rectangular wire.

### Brief Descriptions of Drawings

[Fig. 1] Fig. 1 is a perspective view of the first embodiment of a terminal plate circuit of the present invention.
[Fig. 2] Fig. 2 is a fractured perspective view illustrating a contact state of constituent components of the first embodiment of the terminal plate circuit of the present invention.
[Fig. 3] Fig. 3 is a perspective view of the second embodiment of a terminal plate circuit of the present invention.
[Fig. 4] Fig. 4 is a fractured perspective view illustrating a contact state of constituent components of the second embodiment of the terminal plate circuit of the present invention.
[Fig. 5] Fig. 5 is a perspective view of the third embodiment of a terminal plate circuit of the present invention.
[Fig. 6] Fig. 6 is a fractured perspective view illustrating a contact state of constituent components of the third embodiment of the terminal plate circuit of the present invention.
[Fig. 7] Fig. 7 is a perspective view of the fourth embodiment of a terminal plate circuit of the present invention.
[Fig. 8] Fig. 8 is a fractured perspective view illustrating a contact state of constituent components of the fourth embodiment of the terminal plate circuit of the present invention.
[Fig. 9] Fig. 9 is a perspective view of the fifth embodiment of a terminal plate circuit of the present invention.
[Fig. 10] Fig. 10 is a fractured perspective view illustrating a contact state of constituent components of the fifth embodiment of the terminal plate circuit of the present invention.
[Fig. 11] Fig. 11 is a perspective view of the sixth embodiment of a terminal plate circuit of the present invention.
[Fig. 12] Fig. 12 is a fractured perspective view illustrating a contact state of constituent components of the sixth embodiment of the terminal plate circuit of the present invention.

### Best Mode for Carrying Out the Invention

The embodiments of the terminal plate circuit of the present invention will now be illustrated with reference to the drawings hereinafter, but the present invention is not limited thereto.

### (First Embodiment)

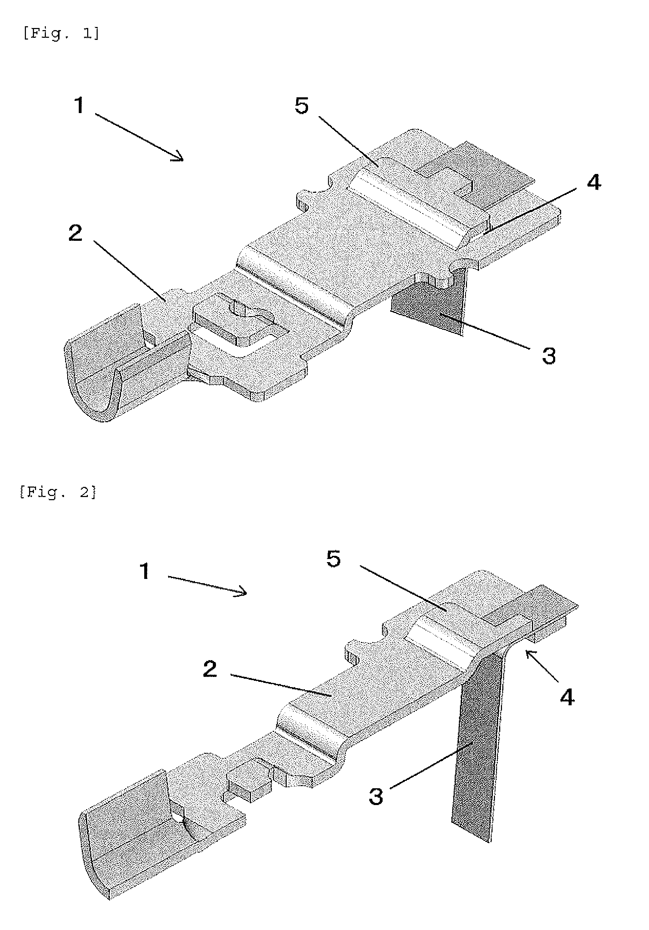

Fig. 1 is a perspective view showing the first embodiment of a terminal plate circuit of the present invention. Fig. 2 is a fractured perspective view showing a contact state of constituent components in the terminal plate circuit of Fig. 1. As is obvious from Figs. 1 and 2, a terminal plate circuit 1 includes a terminal plate 2 and a rectangular wire 3. The terminal plate 2 is provided, by pushing out the material of a part of the terminal plate from lower side to upper side, with an opening 4 having such a size as to allow the rectangular wire 3 to penetrate therethrough and as to prevent the rectangular wire 3 from being largely shifted in lateral directions. The rectangular wire 3 is inserted into the opening 4 from the lower side of the terminal plate 2 and is penetrated to the upper side of the terminal plate 2. The rectangular wire 3 projecting onto the upper side of the terminal plate 2 is pressed against a surface and/or an edge on the upper side of the terminal plate by a projection 5 of the terminal plate which has been pushed out in order to form the opening 4. In this manner, the electrical connection state between the terminal plate 2 and the rectangular wire 3 becomes sure.

The opening 4 has a size enough to allow the rectangular wire 3 to freely penetrate therethrough until the rectangular wire 3 penetrates from the lower side to the upper side. The opening 4 becomes narrow since the projection 5 of the terminal plate 2 which has been pushed out in order to form the opening presses the rectangular wire when the electrical connection state between the terminal plate 2 and the rectangular wire 3 is formed. The projection 5 of the terminal plate 2 may take any shape unless it is completely separated from the terminal plate 2: for example, it may be partly cut or may be divided into a plurality of parts. Here, the important thing is that the projection 5 of the terminal plate 2, which is not completely separated from the terminal plate 2, firmly presses the rectangular wire 3 so as to establish the electrical connection state between the terminal plate 2 and the rectangular wire 3. The projection 5 of the terminal plate 2 may press the rectangular wire 3 against not only a single part but also a plurality of parts in the terminal plate 2: for example, it may press the rectangular wire 3 against not only the upper surface of the terminal plate 2 but also the upper edge of the opening 4.

The rectangular wire 3 used in the terminal plate circuit 1 of the present invention may be appropriately selected from conventionally known ones. The terminal plate 2 should be preferably enlarged as shown in Figs. 1 and 2 in order to enhance the function for cooling a diode to be mounted thereon in the case where the terminal plate 2 is used within a terminal box for solar cell panel. The other constituent components used in the terminal plate circuit 1 may be appropriately selected from conventionally known ones.

The terminal plate circuit 1 of the present invention can provide a firmer electrical connection state between the terminal plate 2 and the rectangular wire 3 by soldering or welding in such a manner as to cover the electrical contact part between the terminal plate 2 and the rectangular wire 3, in addition to pressing of the projection 5 of the terminal plate 2 against the rectangular wire 3 as described above.

### (Second Embodiment)

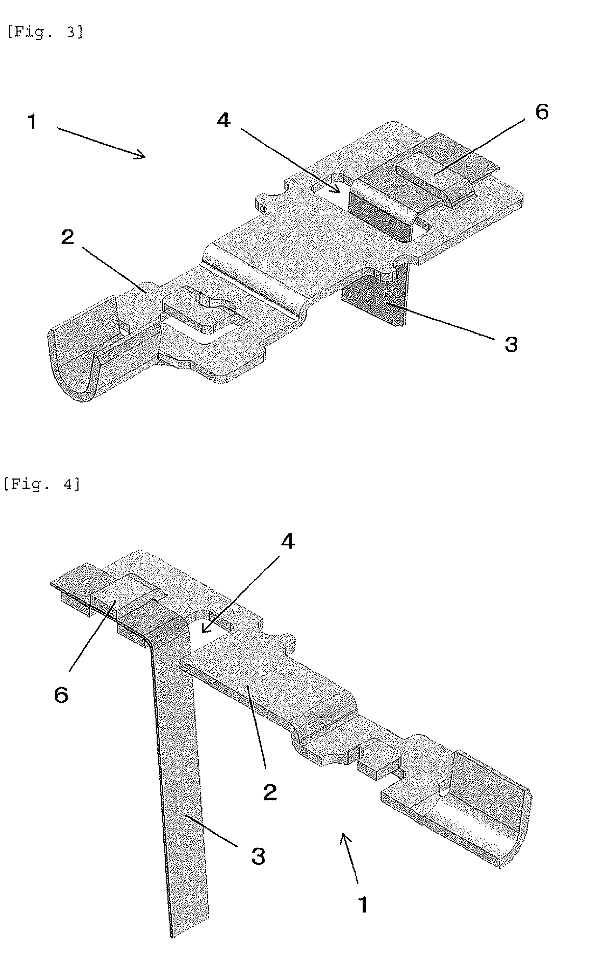

Fig. 3 is a perspective view showing the second embodiment of a terminal plate circuit of the present invention. Fig. 4 is a fractured perspective view showing a contact state of constituent components in the terminal plate circuit of Fig. 3. In the above first embodiment, the projection 5 of the terminal plate 2 is formed by pushing out the terminal plate 2 from the lower side to the upper side when forming the opening 4 through which the rectangular wire 3 penetrates. A major difference in the second embodiment resides in that a projection 6 of a terminal plate 2 is formed by pushing out, at a position different from an opening 4 through which a rectangular wire 3 penetrates, a material of a part of the terminal plate from the lower side to the upper side of the terminal plate in such a manner as not to be completely separated from the terminal plate, as is obvious from Figs. 3 and 4. In other words, the substantial difference between the first and second embodiments is whether the projection 5 of the terminal plate 2 for pressing the rectangular wire 3 is formed from the opening 4 for allowing the rectangular wire 3 to penetrate therethrough or from the part other than the opening 4. The other matters are basically identical to each other between the first and second embodiments without any substantial difference.

### (Third Embodiment To Sixth Embodiment)

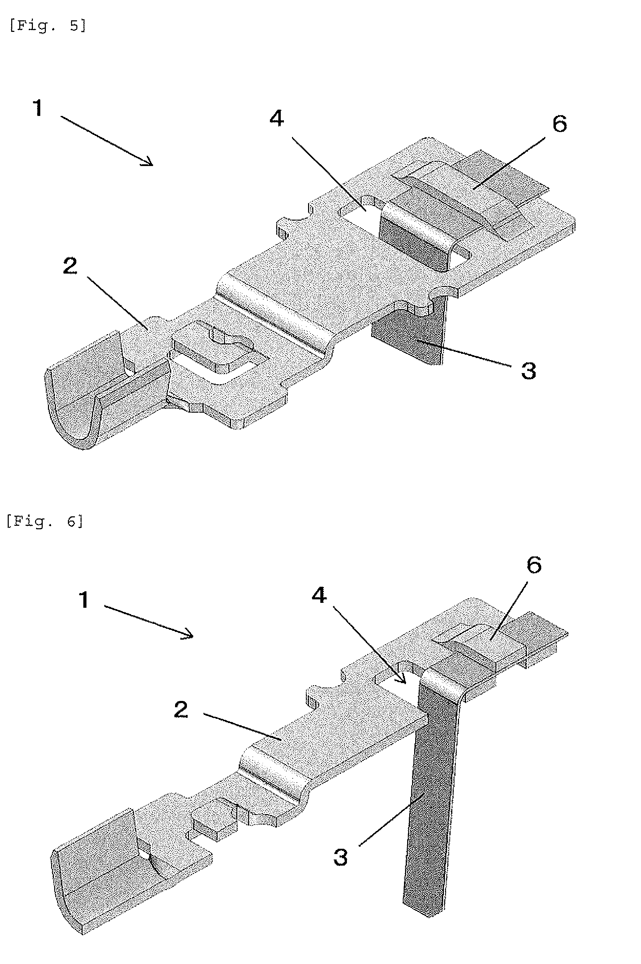

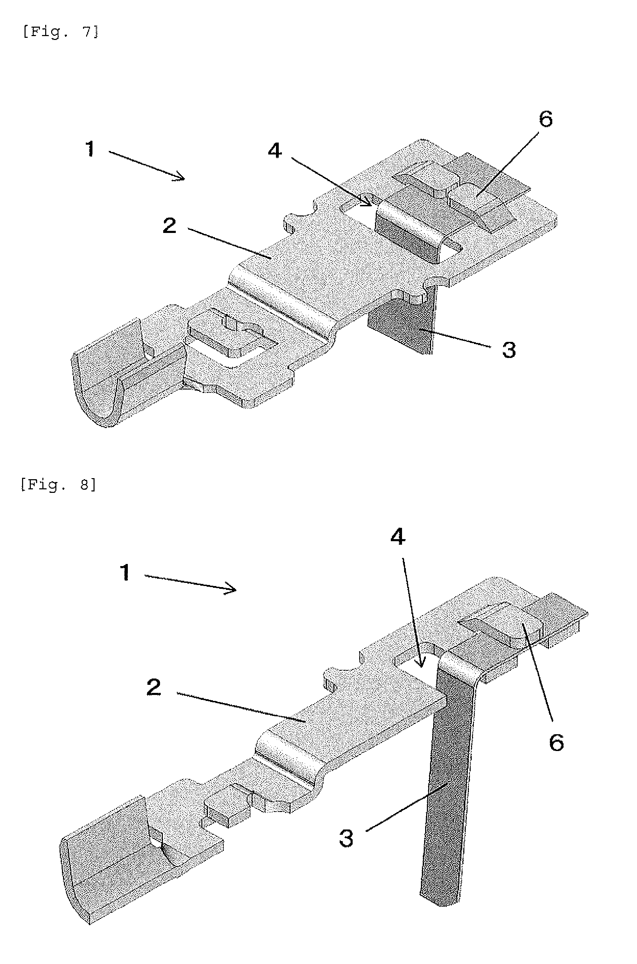

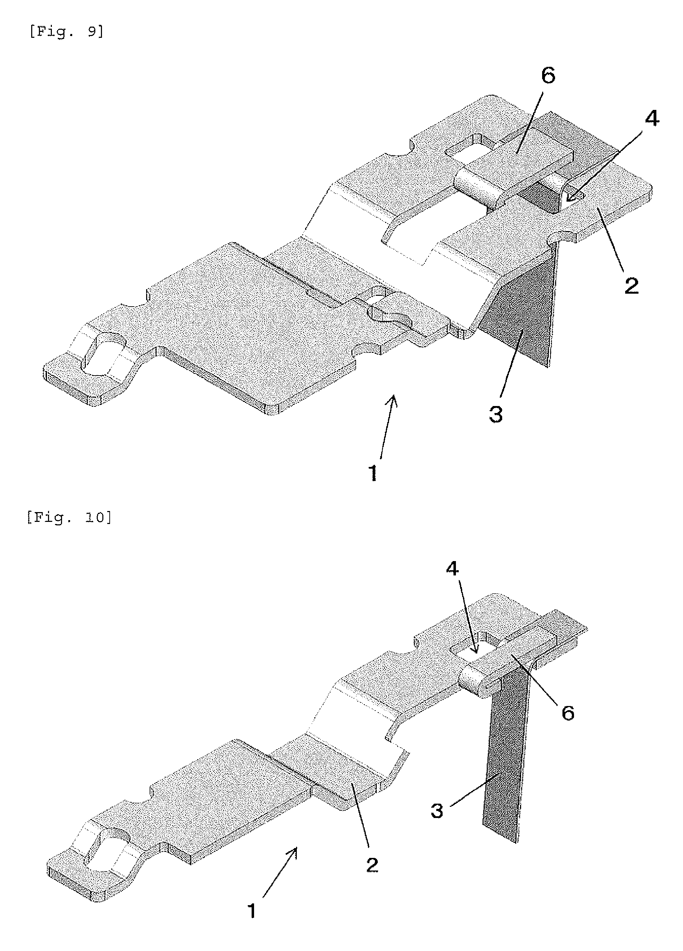

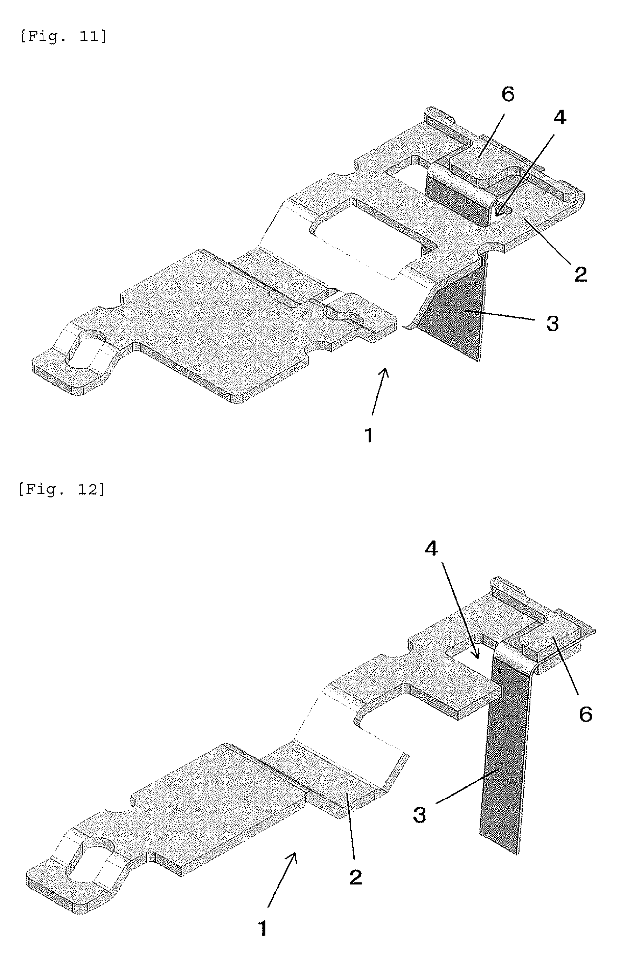

Fig. 5 is a perspective view showing the third embodiment of a terminal plate circuit of the present invention, and Fig. 6 is a fractured perspective view showing a contact state of constituent components in the terminal plate circuit of Fig. 5. Fig. 7 is a perspective view showing the fourth embodiment of a terminal plate circuit of the present invention, and Fig. 8 is a fractured perspective view showing a contact state of constituent components in the terminal plate circuit of Fig. 7. Fig. 9 is a perspective view showing the fifth embodiment of a terminal plate circuit of the present invention, and Fig. 10 is a fractured perspective view showing a contact state of constituent components in the terminal plate circuit of Fig. 9. Fig. 11 is a perspective view showing the sixth embodiment of a terminal plate circuit of the present invention, and Fig. 12 is a fractured perspective view showing a contact state of constituent components in the terminal plate circuit of Fig. 11. The third to sixth embodiments relate to several modifications of the projection 6 of the terminal plate 2 in the second embodiment of the present invention.

In the second embodiment of the present invention, the projection 6 of the terminal plate 2 is formed into a door, and presses the rectangular wire 3 disposed thereunder. In the third embodiment, a projection 6 projects in a bridge shape, and presses a rectangular wire 3 disposed thereunder. In the fourth embodiment, a projection 6 is formed into double doors by dividing a projected bridge part at the center thereof, and presses a rectangular wire 3 disposed thereunder. In the fifth embodiment, a projection 6 is formed into a door, and the opened door presses a rectangular wire 3 over an opening 4. In the sixth embodiment, a projection 6 is formed by folding an end of a terminal plate 2 from lower side to upper side, and presses a rectangular wire 3 disposed thereunder. The other matters are basically identical to those in the first and second embodiments of the present invention.

### Industrial Applicability

The terminal plate circuit of the present invention can enhance the reliability of the electrical connection state between the terminal plate and the rectangular wire by the simple method without using any independent component, and therefore, it can be suitably adopted for automating the manufacturing processes of a terminal box for solar cell panel. Explanation of Reference Number

- 1:: terminal plate circuit
- 2:: terminal plate
- 3:: rectangular wire
- 4:: opening
- 5:: projection
- 6:: projection

## Claims

1. A terminal plate circuit including a terminal plate and a rectangular wire, **characterized in that** an opening through which the rectangular wire can penetrate is formed in the terminal plate by pushing out a material of a part of the terminal plate from one side to the other side in such a manner as not to be completely separated from the terminal plate; **in that** the rectangular wire penetrates the terminal plate from one side to the other side thereof through the opening; and **in that** the rectangular wire projecting onto the other side of the terminal plate is pressed against a surface and/or an edge on the other side of the terminal plate by a projection of the terminal plate which has been formed by pushing out the material of a part of the terminal plate.

2. The terminal plate circuit according to claim 1, wherein the part at which the rectangular wire is pressed against the terminal plate is soldered or welded.

3. A terminal plate circuit including a terminal plate and a rectangular wire, **characterized in that** an opening through which the rectangular wire can penetrate is formed in the terminal plate; **in that** the rectangular wire penetrates the terminal plate from one side to the other side thereof through the opening; and **in that** the rectangular wire projecting onto the other side of the terminal plate is pressed against a surface and/or an edge on the other side of the terminal plate by a projection of the terminal plate which has been formed by pushing out a material of a part of the terminal plate at a position different from the opening from one side to the other side of the terminal plate in such a manner as not to be completely separated from the terminal plate.

4. The terminal plate circuit according to claim 3, wherein the part at which the rectangular wire is pressed against the terminal plate is soldered or welded.

5. The terminal plate circuit according to any one of claims 1 to 4, wherein the terminal plate circuit is used within a terminal box for solar cell panel.
